# EUROPÄISCHE PATENTANMELDUNG

(11) **EP 1 189 033 A1**
(43) Veröffentlichungstag der Anmeldung: **20.03.2002**
(21) Anmeldenummer: 00810838.3
(22) Anmeldetag: 15.09.2000
(51) Int. Cl.: G01D 5/14, G01D 5/16, G06M 1/274, G01F 1/075, G01F 1/115, G01F 15/06, G01F 15/075

(54) **Magnetischer Winkel- oder Wegmessgeber**

(71) Anmelder: ABB RESEARCH LTD., 8050 Zürich (CH)
(72) Erfinder: Byatt, John Anthony, 5313 Nussbaumen (CH); Prêtre, Philippe, 5405 Baden-Dättwil (CH); Matter, Daniel, 5200 Brugg (CH); Kleiner, Thomas, 5442 Fislisbach (CH)
(74) Vertreter: ABB Patent Attorneys

(57) **Zusammenfassung**

Der Messgeber (1) dient zur Bestimmung der gegenseitigen Lage einer Massverkörperung (3) und eines Abtastkopfes (2), wobei die Massverkörperung (3) relativ zum Abtastkopf (2) in einer Richtung zwischen einer Anzahl Positionen bewegbar ist. Die Massverkörperung (3) weist für jede Position einen Permanentmagneten (31) auf, wobei die Orientierungen der Permanentmagneten (31) derart gewählt sind, dass keine zwei Permanentmagneten (31) dieselbe Orientierung haben. Der Abtastkopf (2) weist einen 2D-Magnetfeldsensor (21) zur Bestimmung der Orientierung desjenigen Permanentmagneten (31) auf, der sich an einer Referenz-Lage befindet. Der Messgeber (1) arbeitet berührungslos, ist einfach und kostengünstig herstellbar und weist eine geringe Empfindlichkeit gegenüber Verschmutzungen auf. Er kann in bestehende Verbrauchszähler wie bspw. Strom-oder Wasserzähler integriert werden, um deren automatische Ablesung zu ermöglichen.

## Beschreibung

### TECHNISCHES GEBIET

Die Erfindung betrifft einen magnetischen Winkel- oder Wegmessgeber und ein Verfahren zur magnetischen Winkel- oder Wegmessung gemäss den Oberbegriffen der unabhängigen Patentansprüche. Sie kann bspw. in Verbrauchszählern wie Stromzählern, Wasserzählern, Kilometerzählern in Fahrzeugen etc. eingesetzt werden.

### STAND DER TECHNIK

Viele Verbrauchszähler, z.B. Stromzähler oder Wasserzähler, sind heute aus Gründen der Zuverlässigkeit, der Sicherheit, aber auch aus historischen Gründen immer noch als mechanische Zähler ausgebildet. Ihre Auslesung geschieht heute vielfach noch mittels visueller Ablesung eines Angestellten der Abrechnungsfirma in den Wohnungen der Kunden selbst. Diese Arbeit ist zeitintensiv und umständlich, da der Zugang zu den einzelnen Wohnungen vor jedem Ablesen sichergestellt sein muss. Als Folge werden die Ableseintervalle meist sehr lang, was eine kosteneffiziente (z. B. monatliche) Abrechnung verunmöglicht. Um die Information eines solchen Zählers für die elektronische Datenverarbeitung nutzbar zu machen, z. B. zur Fernablesung, ist eine Vorrichtung bzw. ein Verfahren erforderlich, mit welchem der Zählerstand ermittelt und als elektrisches bzw. elektronisches Ausgangssignal ausgelesen werden kann, ohne die Funktion des Zählers zu behindern.

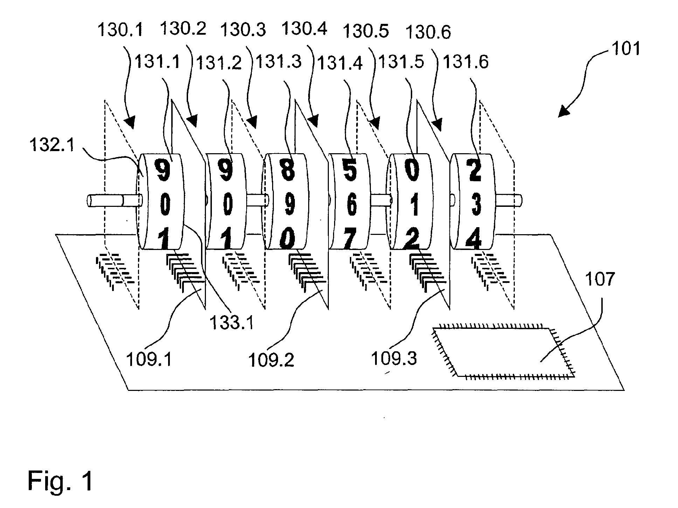

In einigen Märkten sind Geräte im Einsatz, bei denen der Zählerstand elektronisch über Kabel und ein spezielles Auslesegerät von ausserhalb der Wohnung abgelesen werden kann. Zu diesem Zweck muss die Zählerstandinformation zuerst einmal entkodiert und in ein elektrisches Signal umgewandelt werden. **Figur 1** zeigt einen Entkoder 101 gemäss Stand der Technik.

Dieser Entkoder 101 ist mit zylindrischen Zählerrädchen 130.1-130.6 ausgestattet, deren Mantelflächen 131.1-131.6 nach wie vor mit Ziffern 0 bis 9 zur visuellen Ablesung bezeichnet sind. Die Stirnseiten 132.1-132.6, 133.1-133.6 der Zählerrädchen 130.1-130.6 weisen geeignete (bspw. mit einem Gray-Code versehene) Leiterbahnen auf, welche von Schleifkontakten abgegriffen werden. Eine andere bekannte Ausführungsform funktioniert mit Lichtschranken, die axial durch eine geeignete Schlitzmaske auf dem Zählerrädchen die Position des Zählerrädchens erfassen. Eine elektronische Auswerteeinheit 107 wertet die Signale aus. Beide Ausführungsformen haben den Nachteil, dass zwischen den einzelnen Zählerrädchen 130.1-130.6 eine Vorrichtung 109, bspw. eine gedruckte Schaltung (printed circuit board, PCB) zur Befestigung der Schleifkontakte bzw. von Lichtquelle und Lichtempfänger vorhanden sein muss. Dies macht den Entkoder 101 aufwendig und teuer. Bei den Schleifkontakten kommt hinzu, dass im jahrelangen Betrieb Abnutzungserscheinungen auftreten; kontaktlose Lösungen wären vorzuziehen, um die Langzeitstabilität zu erhöhen.

Eine andere Klasse bekannter Drehgeber vermeidet den Nachteil zwischen den Scheiben anzubringender Messköpfe, indem die Massverkörperung auf der Mantelfläche der Scheibe (oder Trommel) angebracht wird. In der Schrift JP-11 051 702 A ist die Massverkörperung als sequentieller, binärer Code auf einer geschlossenen Bahn entlang einem Trommelumfang ausgebildet. Der Code wird optisch auf einen Photodetektor abgebildet und von diesem erfasst. Die Auswertung eines solchen Codes ist aber aufwendig und teuer, so dass dieser Drehgeber für Low-Cost-Anwendungen wie Strom- oder Wasserzähler kaum geeignet ist. Ausserdem muss der Code neben den bestehenden Ziffern 0 bis 9 zur visuellen Ablesung angebracht werden, oder die Ziffern müssen ganz eliminiert werden, um die optische Erfassung des Codes nicht zu beeinträchtigen; dies ist in vielen Fällen unerwünscht und mit weiterem Aufwand verbunden.

### DARSTELLUNG DER ERFINDUNG

Es ist Aufgabe der Erfindung, einen Winkel- oder Wegmessgeber zu schaffen und ein Verfahren zur Winkel- oder Wegmessung anzugeben, welche die obigen Nachteile vermeiden. Insbesondere soll der Messgeber berührungslos arbeiten, einfach und kostengünstig herstellbar sein, eine geringe Empfindlichkeit gegenüber Verschmutzungen aufweisen und, im Fall von Winkelmessgebern in Verbrauchszählern, eine visuelle Ablesung von auf den Zählerrädchen angebrachten Ziffern zulassen.

Die Aufgabe wird gelöst durch den Messgeber und das Verfahren, wie sie in den unabhängigen Patentansprüchen definiert sind.

Die Erfindung beruht im Wesentlichen auf der Idee, eine Vielzahl von Permanentmagneten auf der Massverkörperung so anzubringen, dass die Orientierung ihrer Nord-Süd-Achsen für ihre Lage auf der Massverkörperung charakteristisch ist. Die Orientierung eines dieser Permanentmagneten auf der Massverkörperung wird mittels eines Abtastkopfes mit einem zweidimensionalen (2D-)Magnetfeldsensor in unmittelbarer Nähe der Massverkörperung ermittelt. Die ermittelte Orientierung hängt von der Stellung der Massverkörperung relativ zum 2D-Magnetfeldsensor ab. Die Orientierung desjenigen Permanentmagneten, der den grössten Einfluss auf das Magnetfeld beim Magnetfeldsensor hat, ist also ein Mass für die Lage der Massverkörperung relativ zum 2D-Magnetfeldsensor.

Dementsprechend muss der 2D-Magnetfeldsensor in erster Linie auf die MagnetfeldRichtung und weniger auf den Betrag des Feldes empfindlich sein. Ein 2D-Hall-Sensor oder ein magnetoresistiver Sensor - bspw. ein giant-magnetic-resistor (GMR)-Sensor - eignen sich daher gleichermassen zur Bestimmung der Orientierung des Permanentmagneten in der Referenz-Lage, d. h. desjenigen Permanentmagneten, der den grössten Einfluss auf das Magnetfeld beim Magnetfeldsensor hat.

Der Messgeber arbeitet berührungslos, ist einfach und kostengünstig herstellbar und weist eine geringe Empfindlichkeit gegenüber Verschmutzungen auf. Er kann in bestehende Verbrauchszähler wie bspw. Strom- oder Wasserzähler integriert werden, um deren automatische Ablesung zu ermöglichen, wobei die Möglichkeit der visuellen Ablesung erhalten bleibt.

Gemäss einer bevorzugten Ausführungsform ist die Massverkörperung eine im Wesentlichen zylindrische Zählerrolle. Der Abtastkopf ist dann ortsfest angebracht. Vorzugsweise definiert er eine zu der Mantelfläche der Zählerrolle im Wesentlichen tangentiale Abtastebene, auf welcher der Sensor platziert ist. Dadurch werden, wenn mehrere Zählerrollen aneinander gereiht sind, keine zusätzlichen vertikalen PCB-Zwischenwände mehr benötigt. Ausserdem kann die Abtastebene als mit dem "Motherboard", d. h. der Träger-Leiterplatte im Wesentlichen zusammenfallend gewählt werden. Ein 2D-Magnetfeldsensor kann somit auf der Träger-Leiterplatte angeordnet und direkt über diese mit einer eventuellen Auswerteeinheit verbunden werden.

### KURZE BESCHREIBUNG DER ZEICHNUNGEN

Im Folgenden werden noch Ausfühfungsformen der Erfindung anhand von Zeichnungen näher beschrieben. In den Zeichnungen zeigen:
- Fig. 1: einen automatisch ablesbaren Verbrauchszähler gemäss Stand der Technik,
- Fig. 2: einen erfindungsgemässen Winkelmessgeber gemäss einer Ausführungsform in perspektivischer Darstellung,
- Fig. 3: einen Ausschnitt aus Fig. 2, durch welchen schematisch die Funktionsweise der Ausführungsform dargestellt ist und
- Fig. 4: ein Messergebnis zur Ermittlung der Genauigkeit des erfindungsgemässen Verfahrens.

### WEGE ZUR AUSFÜHRUNG DER ERFINDUNG

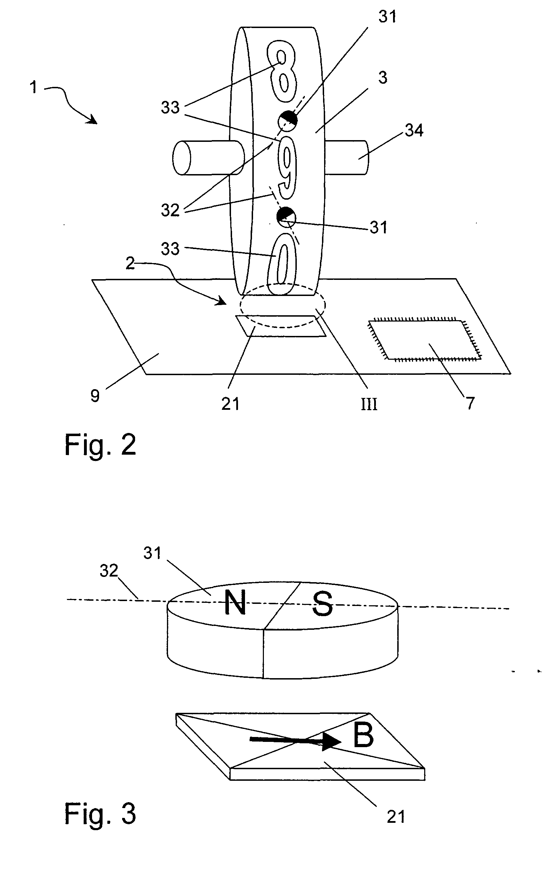

In den **Figuren 2 und 3** ist schematisch eine Ausführungsform eines erfindungsgemässen Winkelmessgebers 1 dargestellt. Die Figur 3 stellt dabei in vergrösserter Darstellung Elemente aus dem mit einer gestrichelten Linie hervorgehobenen Bereich III der Figur 2 dar. Der Winkelmessgeber besitzt in dieser Ausführungsform eine als zylindrische Zählerrolle ausgebildete Massverkörperung 3. Die Mantelfläche der Zählerrolle ist mit bspw. zehn Ziffern 33 zur visuellen Ablesung bezeichnet. Die Massverkörperung ist vorzugsweise auf einer Achse 34 drehbar gelagert. Ausserdem ist noch ein (nicht gezeichneter) Schnapp- oder Arretiermechanismus vorgesehen, der eine endliche Anzahl von stabilen Positionen der Zählerrolle festlegt. Die Anzahl der Positionen entspricht vorzugsweise der gewünschten Auflösung des Winkelmessgebers; bei einem einfachen Verbrauchszähler mit zehn Ziffern 33 beträgt sie also zehn. In diesem Fall sind die verschiedenen Positionen auf der Zählerrolle 3 äquidistant und jeweils um einen Drehwinkel von 36° voneinander getrennt. Gemäss der Erfindung ist nun die Massverkörperung 3 mit einer der Anzahl Positionen entsprechenden Anzahl Permanentmagneten 31 versehen. Dabei sind die Orientierungen der Magneten 31 derart gewählt, dass keine zwei Magneten 31 dieselbe Orientierung haben. In diesem Kontext heisst das, dass sich für beliebige zwei Magneten 31 die Ausrichtung der Verbindungslinie 32 zwischen Nordpol und Südpol unterscheidet, wobei die Orientierung von sich in derselben Position befindlichen Magneten verglichen wird.

Der Winkelmessgeber 1 besitzt weiter einen in den Figuren 2 und 3 nur schematisch dargestellten Abtastastkopf 2. Der Abtastkopf 2 ist in der Nähe der Massverkörperung 3 angebracht und definiert bspw. eine zu dessen Mantelfläche ungefähr tangentiale Abtastebene. Der Abtastkopf 2 weist einen direkt auf einer Träger-Leiterplatte 9 aufgebrachten 2D-Magnetfeld-Sensor 21 auf, im gezeichneten Beispiel eine Hall-Sonde. Über in der Zeichnung nicht näher dargestellte, auf der Leiterplatte 9 vorhandene Leiterbahnen sind Ausgänge des Sensors 21 mit einer Auswerteeinheit 7 verbunden.

In der Zeichnung ist schematisch ein Hall-Sensor 21 als 2D-Magnetfeld-Sensor gezeichnet. Der Hall-Sensor 21 kann Betrag und Richtung der Projektion des Magnetfeldes B auf die zur Träger-Leiterplatte 9 parallele Abtastebene und daraus den Winkel der Projektion des Magnetfeldes B auf diese Abtastebene 9 bezüglich einer Normrichtung bestimmen. Ein 2D-Hall-Sensor ist dem Fachmann an sich bekannt und muss hier nicht näher beschrieben werden. Auch ein magnetoresistiver Sensor, z.B. ein AMR- (anisotroper Magnetowiderstand) oder ein GMR-(Riesenmagnetowiderstand) Sensor kann eingesetzt werden, um in der Abtastebene 9 den Winkel der Projektion des Magnetfeldes B bezüglich einer Referenzrichtung zu bestimmen. Auch hier sei auf die Kenntnisse der Fachperson sowie auf einschlägige Publikationen verwiesen, wenn es um Funktionsweise und Ausgestaltung des Sensors geht.

Der 2D-Magnetfeldsensor dient zur Bestimmung der Orientierung des dem Abtastkopf 2 am nächsten liegenden und also das Magnetfeld B im Bereich des 2D-Magnetfeldsensors 21 bestimmenden Permanentmagneten 31. Die Lage, in der sich der dem Magnetfeldsensor 21 am nächsten liegende Permanentmagnet 31 befindet, in den Figuren 2 und 3 also zuunterst, wird hier "Referenzlage" genannt. Die Richtung des vom Permanentmagneten 31 in der Referenzlage erzeugten Magnetfeldes B wird durch den Magnetfeldsensor 21 bestimmt. Die Auswerteeinheit 7 ermittelt daraus die Lage der Massverkörperung 3 relativ zum Abtastkopf 2. Wenn die Orientierung der verschiedenen Permanentmagneten 31 sich bspw. um jeweils mindestens 36° unterscheidet, d. h. wenn zehn Permanentmagneten 31 vorhanden sind, deren Orientierungsrichtungen auf einen ganzen Vollwinkel (360°) verteilt angeordnet sind, ist eine vom Magnetfeldsensor 21 erreichte Winkel-Auflösung von einigen Grad genügend, um die Winkellage der Massverkörperung 3 eindeutig zu ermitteln. Eine solche Winkelgenauigkeit wird mit einfachen, kommerziell erhältlichen Magnetfeldsensoren mühelos erreicht. Unter den kommerziell angebotenen magnetoresistiven Sensoren gibt es Modelle, welche die Polarität eines Magnetfeldes nicht ermitteln können. In diesem Fall ist die Verteilung der Permanentmagneten-Orientierung bspw. so gewählt, dass sich die Gesamtheit aller gewählten Orientierungen nur über einen halben Vollwinkel (180°) erstreckt, dass sich also die Orientierung zweier Permanentmagneten 31 nur um mindestens 18° unterscheidet. In diesem Fall muss, im Vergleich zum vorherigen Beispiel, die Winkelauflösung des Magnetfeldsensors 21 doppelt so hoch sein.

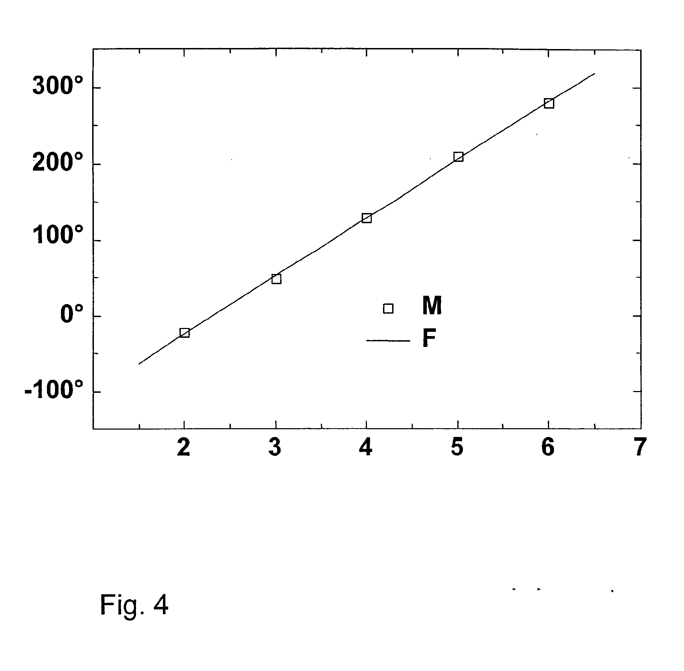

In der **Figur 4** ist ein Beispiel für eine Messung dargestellt, in welcher die Magnetfeldrichtung in Funktion der Winkellage der Massverkörperung 3 ermittelt wurde. Die Messung ist durch Punkte M dargestellt, eine Gerade F repräsentiert einen linearen Fit an die Messpunkte M. Fünf verschiedene Positionen der Massverkörperung 3 sind mit den Zählerrollenziffern 2 bis 6 bezeichnet und auf der Ordinate der in der Figur 4 gezeigten Kurve dargestellt; die Orientierungen der sich jeweils an der Referenzlage befindenden Permanentmagneten - in Bezug auf eine willkürlich gewählte Normrichtung - sind auf der Abszisse dargestellt. Die Orientierungen benachbarter Permanentmagneten unterscheiden sich jeweils um ca. 72°.

Die hier diskutierten Ausführungsformen stellen bloss Beispiele dar. Bei Kenntnis der Erfindung ist der Fachmann in der Lage, weitere Ausführungsformen herzuleiten. Insbesondere ist es auch möglich, die Permanentmagneten stirnseitig auf einer Zählerrolle anzubringen; der Abtastkopf ist dann entsprechend ebenfalls stirnseitig angeordnet.

Ferner sei noch erwähnt, dass die Erfindung auch auf lineare Wegmessgeber angewendet werden kann. Auch in diesem Fall entspricht die Anzahl auflösbarer Positionen (die jeweils durch eine Translation der Massverkörperung relativ zum Abtastkopf ineinander überführt werden können) der Anzahl Permanentmagneten.

Weiter kann im Prinzip auch der Abtastkopf Permanentmagnete aufweisen, wobei dann die Massverkörperung den Magnetfeldsensor aufweist. Im Falle eines Winkelmessgebers sind dann die Permanentmagneten des Abtastkopfs bspw. zirkumferentiell um die Massverkörperung herum angebracht. Die Referenz-Lage ist in diesem Fall durch die Lage des Magnetfeldsensors festgelegt und wird also durch die Position der Massverkörperung bestimmt.

### BEZUGSZEICHENLISTE

- 1: Winkelmessgeber

- 2: Abtastkopf
- 21: Magnetfeldsensor

- 3: Massverkörperung
- 31: Permanentmagneten
- 32: Verbindungslinie
- 33: Ziffern
- 34: Achse

- 7: Auswerteeinheit

- 9: Trägerplatte

- 101: Entkoder gem. Stand der Technik
- 130: Zählerrädchen
- 131: Mantelfläche
- 132, 133: Stirnflächen
- 107: Auswerteeinheit
- 109: gedruckte Schaltung

- B: Magnetfeld
- M: Messpunkte
- F: Fit-Gerade

## Patentansprüche

1. Messgeber (1) zur Bestimmung der gegenseitigen Lage einer Massverkörperung (3) und eines Abtastkopfes (2), wobei
die Massverkörperung (3) relativ zum Abtastkopf in einer Richtung zwischen einer Mehrzahl von Positionen bewegbar ist,
**dadurch gekennzeichnet,**
**dass** die Massverkörperung (3) bzw. der Abtastkopf (2) für jede Position einen ein Magnetfeld (B) erzeugenden Permanentmagneten (31) aufweist, wobei die Orientierungen der Permanentmagneten (31) derart gewählt sind, dass keine zwei Permanentmagneten (31) dieselbe Orientierung haben, und
**dass** der Abtastkopf (2) bzw. die Massverkörperung (3) einen 2D-Magnetfeldsensor (21) zur Bestimmung der Orientierung desjenigen der Permanentmagneten (31) beinhaltet, welcher sich an einer Referenz-Lage befindet.

2. Messgeber (1) nach Anspruch 1, **dadurch gekennzeichnet, dass** der Magnetfeldsensor (21) ein 2D-Hall-Sensor oder ein Riesenmagnetowiderstand (GMR)-Sensor ist.

3. Messgeber (1) nach einem der vorangehenden Ansprüche, **dadurch gekennzeichnet, dass** der Messgeber (1) ein Winkelmessgeber ist, dass die Massverkörperung (3) im Wesentlichen die Form eines Zylinders mit einer Mantelfläche aufweist und dass der Magnetfeldsensor (21) in einer zu der Mantelfläche der Massverkörperung (3) im Wesentlichen tangentialen Ebene angebracht ist.

4. Messgeber nach Anspruch 3, **dadurch gekennzeichnet, dass** eine Träger-Leiterplatte (9) im Wesentlichen tangential zu der Mantelfläche der Massverkörperung angebracht ist, und dass der Magnetfeldsensor (21) auf dieser Träger-Leiterplatte (9) angebracht ist.

5. Verfahren zur Bestimmung der gegenseitigen Lage einer Massverkörperung (3) und eines Abtastkopfes (2), wobei
die Massverkörperung (3) relativ zum Abtastkopf in einer Richtung zwischen einer Mehrzahl von Positionen bewegbar ist,
**dadurch gekennzeichnet,**
**dass** die Massverkörperung (3) bzw. der Abtastkopf (2) für jede Position einen ein Magnetfeld (B) erzeugenden Permanentmagneten (31) aufweist, wobei die Orientierungen der Permanentmagneten (31) derart gewählt sind, dass keine zwei Permanentmagneten (31) dieselbe Orientierung haben, und
**dass** mit einem 2D-Magnetfeldsensor (21) die Orientierung desjenigen Permanentmagneten (31) bestimmt wird, welcher sich an einer Referenz-Lage befindet.

6. Verfahren nach Anspruch 5, **dadurch gekennzeichnet, dass** die Orientierung des Permanentmagneten (31) in der Referenzlage durch einen 2D-Hall-Sensor oder einen Riesenmagnetowiderstand (GMR)-Sensor bestimmt wird.

7. Verfahren nach Anspruch 5 oder 6, **dadurch gekennzeichnet, dass**, dass die Massverkörperung (3) im Wesentlichen die Form eines Zylinders mit einer Mantelfläche und einer Zylinderachse aufweist und um die Zylinderachse drehbar ist und dass der Magnetfeldsensor (21) zur Bestimmung der Orientierung des Permanentmagneten (31) in einer vorgegebenen Lage in einer zu der Mantelfläche der Massverkörperung (3) im Wesentlichen tangentialen Ebene angesetzt wird.

8. Verwendung des Messgebers (1) nach einem der Ansprüche 1-4 für die automatische Auslesung von Verbrauchszählern wie bspw. Stromzählern, Wasserzählern oder Kilometerzählern in Fahrzeugen.
